(19) **Europäisches Patentamt / European Patent Office / Office européen des brevets**

(11) **EP 2 065 407 B1**

(12) **EUROPEAN PATENT SPECIFICATION**

(45) Date of publication and mention
of the grant of the patent:
**13.10.2010 Bulletin 2010/41**

(51) Int Cl.:
**C08F 10/00** *(2006.01)*   **C08F 210/06** *(2006.01)*

(21) Application number: **07122053.7**

(22) Date of filing: **30.11.2007**

(54) **Random propylene copolymer with high comonomer content**

Random-Propylencopolymer mit hohem Comonomergehalt

Copolymère de propylène aléatoire avec contenu de comonomère élevé

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**03.06.2009 Bulletin 2009/23**

(73) Proprietor: **Borealis Technology OY
06101 Porvoo (FI)**

(72) Inventors:
• **Denifl, Peter
00990 Helsinki (FI)**
• **Leinonen, Timo
06750 Tolkkinen (FI)**

• **Haikarainen, Anssi
04300 Tuusula (FI)**
• **Vestberg, Torvald
06100 Porvoo (FI)**

(74) Representative: **Lux, Berthold
Maiwald Patentanwalts GmbH
Elisenhof
Elisenstraße 3
80335 München (DE)**

(56) References cited:
**EP-A- 0 887 380     EP-A- 1 227 112
EP-A- 1 803 743     WO-A-98/58971**

**Description**

The present invention relates to a propylene random copolymer which has low stickiness, in particular little tendency to adhere to the inner wall of a polymerisation reactor.

Propylene homopolymers have high resistance to heat and chemicals as well as beneficial mechanical properties. However, other properties of propylene homopolymers such as impact strength, in particular at low temperature, flexibility, clarity or haze need to be improved for specific applications.

It is known that mechanical properties such as impact strength or optical properties can be improved by copolymerising propylene with ethylene or other α-olefins. If these comonomers are randomly distributed within the polymeric chain, a propylene random copolymer is obtained. Propylene random copolymers are *inter alia* used in blow moulding, injection moulding, and film extrusion applications for the preparation of materials such as food packaging, medical packaging, and consumer products.

For specific applications, a high amount of comonomers needs to be incorporated into the polypropylene, e.g. to provide a material having a higher flexibility and softness, improving also impact strength. Furthermore, optical properties as well as sealability are improved with polypropylene having higher comonomer content. However, the higher the comonomer content, the higher is the risk that these comonomers build separate blocks.

A further problem which arises when increasing comonomer content is stickiness of the polymer particles. Due to the stickiness, the polymer particles agglomerate, settle in the reactor and/or transfer lines, and adhere to the inner surface of the polymerization reactor. Thus, transfer to another reactor or final removal from the reactor for further processing is significantly impaired.

To some extent, the degree of stickiness can be reduced by adding antistatic agents. However, as these antistatic agents can be adsorbed on the active catalyst surface, they have a detrimental impact on catalytic activity.

Many conventional Ziegler-Natta type catalysts are provided on a porous support structure. In particular when producing heterophasic propylene copolymers with a high ethylene content, a porous support structure has been considered to be important, based on the assumption that a porous catalyst particle will produce a porous polymer particle (i.e. the so-called "replica effect"). The rubber may then penetrate into the pores of the polymer matrix.

However, porous support structures are prone to fragmentation, thereby resulting in very small catalyst fragments which can act as "hot catalyst particles" and favour the formation of sticky po lymer material.

A new type of catalyst for olefin polymerisation is described in WO 03/000754. The catalyst particles are prepared by an emulsion method and provide polymer particles of improved morphology.

According to WO 2005/113613, this new type of catalyst as described in WO 03/000754 is used for the preparation of a heterophasic propylene copolymer having a high rubber content and high ethylene content within the rubber. The new type of catalyst results in a heterophasic copolymer of improved stickiness, i.e. the polymer powder is free flowing both in the reactor and after reaction. However, as disclosed in WO 2005/113613, the comonomer within the polypropylene matrix is less than 5 wt%.

According to EP 1 681 315 A1, the new type of catalyst prepared by the emulsion method can be used for the formation of a propylene random copolymer having an overall comonomer content of more than 5 wt%. Subsequently, a rubber phase is formed within the random copolymer matrix.

In WO 2007/077027, a Ziegler-Natta type catalyst is disclosed which is prepared by the emulsion method and comprises nano-sized inclusions being devoid of catalytic activity. WO 2007/077027 exclusively refers to propylene homopolymers.

It has been realised by the applicant that the type of catalyst as described in WO 03/000754 can be used for the formation of propylene random copolymers of high comonomer content, e.g. as described in EP 1 681 315 A1, but problems of stickiness inside the reactor may arise due to the high comonomer content. One possibility to overcome the problem is to reduce the comonomer content within the random copolymer, e.g. below 5 wt% as disclosed in WO 2005/113613. However, for specific applications the propylene random copolymer needs to have a high comonomer content so as to provide the desired properties.

Thus, considering the drawbacks discussed above, it is an object of the present invention to provide a propylene random copolymer which has low stickiness, even with high comonomer content, during the polymerisation process, in particular little tendency to adhere to the inner wall of the polymerisation reactor, and thus the beneficial properties of random copolymers can be achieved.

According to the present invention, the object is solved by providing a propylene random copolymer, comprising comonomers selected from the group consisting of ethylene, $C_4$ to $C_{20}$ alpha-olefins, and any combination thereof, wherein the propylene random copolymer

(a) has a comonomer content of at least 3.5 wt.-%,
(b) has a randomness of at least 30 %, and
(c) is prepared in the presence of a catalyst system comprising solid catalyst particles, wherein the solid catalyst particles

(c1) have a specific surface area of less than 20 m$^2$/g,
(c2) comprise a transition metal compound which is selected from one of the groups 4 to 10 of the periodic table (IUPAC) or a compound of actinide or lanthanide,
(c3) comprise a metal compound which is selected from one of the groups 1 to 3 of the periodic table (IUPAC), and
(c4) comprise inclusions not having catalytically active sites.

With a comonomer content of at least 3.5 wt% and a randomness of at least 30 %, it is possible to maintain the beneficial properties of random copolymers such as improved impact strength or reduced stiffness. Furthermore, when preparing the propylene random copolymer in the presence of the catalyst system as defined above, stickiness can be reduced. In particular, the random copolymer of the present invention has little tendency to adhere to the inner wall of the polymerisation reactor. It is assumed that the use of the catalyst as defined above somehow modifies the surface properties of the polymer particles which in turn has an impact on adhesion behaviour inside the reactor. However, as polymeric particles normally have quite irregular and complex surface structures which are difficult to characterize, it is appropriate to define the random copolymer of the present invention *inter alia* by the process feature which results in the technical effect mentioned above, i.e. reduced adhesion to the reactor walls.

Preferably, the comonomer content of the propylene random copolymer is at least 4.0 wt%, more preferably at least 5.0 wt%, even more preferably at least 5.5 wt%, and still more preferably at least 6.0 wt%.

In a preferred embodiment, the upper limit with respect to the comonomer content of the random copolymer is 12.0 wt%, more preferably 10.0 wt%, even more preferably 8.0 wt%.

In preferred embodiments, the comonomer content is within the range of 3.5 to 12.0 wt%, 4.0 to 12.0 wt%, 5.0 to 10 wt%, 5.0 to 8.0 wt%, 5.5 to 10.0 wt%, or 5.5 to 8.0 wt%.

The inventive propylene random copolymer can be unimodal or multimodal, like bimodal.

The expression "multimodal" or "bimodal" used herein refers to the modality of the polymer, i.e. the form of its molecular weight distribution curve, which is the graph of the molecular weight fraction as a function of its molecular weight. As will be explained below, the polymer components of the present invention can be produced in a sequential step process, using reactors in serial configuration and operating at different reaction conditions. As a consequence, each fraction prepared in a specific reactor will have its own molecular weight distribution. When the molecular weight distribution curves from these fractions are superimposed to obtain the molecular weight distribution curve of the final polymer, that curve may show two or more maxima or at least be distinctly broadened when compared with curves for the individual fractions. Such a polymer, produced in two or more serial steps, is called bimodal or multimodal, depending on the number of maximum steps.

Preferably, the propylene random copolymer comprises at least two fractions which differ in comonomer content, wherein

(i) the first fraction has a comonomer content within the range of 0.5 to 6.0 wt%, more preferably 2.0 to 5.0 wt%, and
(ii) the second fraction has a comonomer content within the range of 5.0 to 12.0 wt%, more preferably 7.0 to 10.0 wt%, even more preferably 7.0 to 9.0 wt%.

Preferably, the comonomer content of the second fraction is higher than the comonomer content of the first fraction.

Preferably, propylene random copolymer has an MFR$_2$ (230 °C, load 2.16 kg, ISO 1133) in the range of 0.03 to 2000 g/10min, preferably 0.03 to 1000 g/10 min, more preferably 0.03 to 400 g/10 min, even more preferably 0.05 to 150 g/10 min.

Preferably, the comonomer is selected from ethylene and/or a C$_4$ to C$_8$ alpha-olefin such as 1-butene; 1-hexene, or 1-octene. Within the present invention, it is possible that the propylene random copolymer includes only a single type of comonomer such as ethylene. Alternatively, the propylene random copolymer may be a terpolymer, e.g. a terpolymer of propylene, ethylene and 1-butene, or a terpolymer of propylene, ethylene, and 1-hexene.

Preferably, the propylene random copolymer has a content of polymer solubles in xylene (XS) within the range of 4.0 to 50.0 wt%, more preferably 5.0 to 40.0 wt%, even more preferably 6.0 to 30.0 wt%, based on the weight of the propylene random copolymer.

In a preferred embodiment, the random copolymer is present in the form of particles which have a bulk density of higher than 500 kg/m$^3$, measured according to ASTM D 1895, and/or a specific surface area of less than 15 m$^2$/g.

As described below in the example section, flowability of a polymer and consequently its tendency to stickiness can be evaluated by a flowability test using a funnel. The faster the polymer passes the funnel, the lower is stickiness. In the following, the time needed for the polymer to flow through the funnel will be designated as flowability value.

Preferably, the propylene random copolymer has a flowability value of less than 5.5 s, more preferably less than 4.5 s, even more preferably less than 3.5 s, and still more preferably less than 3.0 s, measured according to the flowability test as defined further below in the example section (see "Measuring methods"). Most preferably, the flowability value is less than 2.5 s.

As discussed above, with a randomness of at least 30 % the beneficial properties of random copolymers can be maintained. Randomness indicates the amount of isolated comonomer units, i.e. those which have no other comonomer units in the neighbour carbon atoms of the chain, compared to the total amount of comonomers.

In a preferred embodiment, the randomness of the propylene random copolymer is at least 50 %, more preferably at least 55 %, even more preferably at least 60 %, and still more preferably at least 65 %.

Preferably, the propylene random copolymer has a comonomer content within the range of 3.5-12.0 wt%, more preferably 4.0 to 10.0 wt%, and a randomness of at least 35 %, more preferably at least 50 %, even more preferably at least 60 %. In other preferred embodiments, the propylene random copolymer has a comonomer content of 5.0 to 10.0 wt%, more preferably 5.5 to 10.0 wt%, even more preferably 5.5 to 8.0 wt%, and a randomness of at least 50 %, more preferably at least 55 %, even more preferably at least 60 %, and still more preferably at least 65 %.

As already indicated above, preparation of the random copolymer in the presence of a specific catalyst system results in reduced adhesion of the polymeric material to the reactor wall.

The catalyst system comprises solid catalyst particles which comprise inclusions not having catalytically active sites. Thus, it is preferred that the inclusions are free of transition metal compounds which are selected from one of the groups 4 to 10 of the periodic table (IUPAC), and of compounds of actinide or lanthanide.

Preferably, the solid catalyst particles are spherical.

The solid catalyst particles in accordance with the present invention typically have a mean particle size of not more than 500 $\mu$m, e.g. from 1 to 500 $\mu$m or 5 to 500 $\mu$m. In preferred embodiments, the solid particles have a mean particle size range of from 5 to 200 $\mu$m or from 10 to 150 $\mu$m. Smaller mean particle size ranges, however, are also suitable, such as from 5 to 100 $\mu$m. In alternative embodiments, larger mean particle size ranges are possible as well, for example from 20 to 250 $\mu$m. However, in the present invention, the use of catalyst particles with a mean particle size range from 20 to 60 $\mu$m is preferred. These mean particle size ranges of the solid particles in accordance with the present invention may be obtained as explained further below in connection with the method of preparing the solid particles.

In a preferred embodiment, the solid catalyst particles have a specific surface area, measured via the commonly known BET method, of less than 15 m$^2$/g, more preferably less than 10 m$^2$/g, even more preferably less than 5 m$^2$/g.

It is preferred that the catalyst particles have a porosity of less than 1.0 ml/g, more preferably of less than 0.5 ml/g, still more preferably of less than 0.3 ml/g, and even more preferably of less than 0.2 ml/g. In another preferred embodiment, the porosity is not detectable when determined with the method as defined in the example section.

The employed catalyst particles comprise of course one or more catalytically active components. These catalytically active components constitute the catalytically active sites of the catalyst particles.

As stated above, the catalyst particles comprise a transition metal compound which is selected from one of the groups 4 to 10 of the periodic table or a compound of actinide or lanthanide, and comprise a metal compound which is selected from one of the groups 1 to 3 of the periodic table. Preferably, the transition metal and the metal species are present within the same compound, e.g. by reacting an appropriate transition metal precursor compound with an appropriate metal precursor compound, thereby resulting in a catalytically active material, preferably a Ziegler-Natta type catalyst as known to the skilled person. In other words, it is preferred that components (c2) and (c3) form a single compound or solid material, respectively, which comprises the transition metal and the metal species as defined above.

Active components according to this invention are, in addition to the transition metal compound which is selected from one of the groups 4 to 10 of the periodic table (IUPAC) or a compound of actinide or lanthanide and the metal compound which is selected from one of the groups 1 to 3 of the periodic table (IUPAC) (see above and below), also any cocatalyst(s), aluminium alkyl compounds, additional transition metal compounds and/or activators and/or poison scavengers, and/or any reaction product of a transition compound and a cocatalyst and/or aluminium alkyl compounds. Thus, the catalyst may be formed in situ from the catalyst components, for example in solution in a manner known in the art.

It should also be understood that the catalyst particles of the present invention may be used as such in a polymerisation process or be further activated with additional cocatalysts to form the active catalyst system, which further may comprise e.g. external donors etc.. Furthermore, said catalyst of the invention may be part of a further catalyst system. These alternatives are within the knowledge of a skilled person.

As stated above, the catalyst particles comprise

(a) a transition metal compound which is selected from one of the groups 4 to 10, preferably titanium, of the periodic table (IUPAC) or a compound of an actinide or lanthanide,

(b) a metal compound which is selected from one of the groups 1 to 3 of the periodic table (IUPAC), preferably magnesium,

(c) optionally an electron donor compound, and

(d) optionally an alkyl aluminium compound.

Suitable compositions and reaction conditions for forming such catalyst particles are in particular disclosed in WO 03/000754, WO 03/000757, WO 2004/029112, and WO 2007/077027, all four documents are incorporated herein by reference.

Suitable transition metal compounds are in particular transition metal compounds of transition metals of groups 4 to 6, in particular of group 4, of the periodic table (IUPAC). Suitable examples include Ti, Fe, Co, Ni, Pt, and/or Pd, but also Cr, Zr, Ta, and Th, in particular preferred is Ti, like $TiCl_4$. Preferred metal compounds of groups 1 to 3 of the periodic table (IUPAC) are compounds of group 2 elements, in particular Mg compounds, such as Mg halides, Mg alkoxides etc. as known to the skilled person.

In particular, a Ziegler-Natta catalyst (preferably the transition metal is titanium and the metal is magnesium) is employed, for instance as described in WO 03/000754, WO 03/000757, WO 2004/029112, and WO 2007/077027.

The electron donor compound is preferably a mono- or diester of an aromatic carboxylic acid or diacid, the latter being able to form a chelate-like structured complex. Said aromatic carboxylic acid ester or diester can be formed in situ by reaction of an aromatic carboxylic acid chloride or diacid dichloride with a C2-C16 alkanol and/or diol, and is preferable dioctyl phthalate, dihexyl phthalate, or ethyl hexyl phthalate.

The alkyl aluminium compound is preferably a compound having the following formula:

$$AlR_{3-n}X_n$$

wherein

R is a straight chain or branched alkyl group having 1 to 20, preferably 1 to 10 and more preferably 1 to 6 carbon atoms,
X is halogen or alkyl, preferably halogen, and
n is 0, 1, 2 or 3.

Preferred alkyl groups have from 1 to 6 carbon atoms and are straight chain alkyl groups, such as methyl, ethyl, propyl, butyl, pentyl or hexyl, preferably methyl, ethyl, propyl and/or butyl.

Illustrative examples of aluminium compounds that can be used are diethyl aluminium ethoxide, ethyl aluminium diethoxide, diethyl aluminium methoxide, diethyl aluminium propoxide, diethyl aluminium butoxide, dichloro aluminium ethoxide, chloro aluminium diethoxide, dimethyl aluminium ethoxide.

Other suitable examples for the above defined aluminium compounds are tri-(C1-C6)-alkyl aluminium compounds, like triethyl aluminium, tri iso-butyl aluminium, or an alkyl aluminium compound bearing one to three halogen atoms, like chlorine. In particular preferred is triethylaluminium, diethylaluminium chloride and diethyl aluminium ethoxide.

As mentioned above catalyst systems may include in addition to the solid catalyst particles cocatalysts and/ external donor(s) in a manner known in the art.

As the conventional cocatalyst, e.g. those based on compounds of group 13 of the periodic table (IUPAC), e.g. organo aluminium, such as aluminium compounds, like aluminium alkyl, aluminium halide or aluminium alkyl halide compounds (e.g. triethylaluminium) compounds, can be mentioned. Additionally one or more external donors can be used which may be typically selected e.g. from silanes or any other well known external donors in the field. External donors are known in the art and are used as stereoregulating agent in propylene polymerisation. The external donors are preferably selected from hydrocarbyloxy silane compounds and hydrocarbyloxy alkane compounds.

Typical hydrocarbyloxy silane compounds have the formula (II)

$$R'_oSi(OR'')_{4-o} \qquad (II)$$

wherein

R' is an $\alpha$- or $\beta$-branched $C_3$-$C_{12}$-hydrocarbyl,
R" a $C_1$-$C_{12}$-hydrocarbyl, and
o is an integer 1-3.

More specific examples of the hydrocarbyloxy silane compounds which are useful as external electron donors in the invention are diphenyldimethoxy silane, dicyclopentyldimethoxy silane, dicyclopentyldiethoxy silane, cyclopentylmethyldimethoxy silane, cyclopentylmethyldiethoxy silane, dicyclohexyldimethoxy silane, dicyclohexyldiethoxy silane, cyclohexylmethyldimethoxy silane, cyclohexylmethyldiethoxy silane, methylphenyldimethoxy silane, diphenyldiethoxy silane, cyclopentyltrimethoxy silane, phenyltrimethoxy silane, cyclopentyltriethoxy silane, phenyltriethoxy silane. Most preferably, the alkoxy silane compound having the formula (3) is dicyclopentyl dimethoxy silane or cyclohexylmethyl dimethoxy silane.

It is also possible to include other catalyst component(s) than said catalyst components to the catalyst of the invention.

As discussed above, the solid catalyst particles comprise inclusions not having catalytically active sites. However, for the remaining areas of the catalyst particles it is preferred that the catalytically active sites are evenly distributed throughout the catalyst particles.

Preferably, the inclusions can be defined as areas being free of transition metals of groups 4 to 10, in particular of group 4, like Ti, of the periodic table (IUPAC) and being free of a compound of actinide or lanthanide. In other words the inclusions do not comprise the catalytic active materials as defined above, i.e. do not comprise such compounds or elements, which are used to establish catalytically active sites. Thus in case the solid catalyst particles comprise any one of transition metals of groups 4 to 10, in particular of group 4, like Ti, of the periodic table (IUPAC) or a compound of actinide or lanthanide, these are then preferably not present in the inclusions.

Preferably, the inclusions are evenly dispersed within the catalyst particles. Accordingly, a solid catalyst particle can be seen as a matrix in which the inclusions are dispersed, i.e. form a dispersed phase within the matrix phase of the catalyst particle.

The inclusions usually constitute only a minor part of the total volume of the solid catalyst particles, in particular if the inclusions are formed by hollow voids or voids at least partially filled with a liquid typical values are below 50 vol%, more preferably lower than 40 vol% and, in particular 30 vol% of lower, 20 vol% or lower and in some embodiments even 10 vol% or lower. A suitable range is from 8 to 30 vol%, more preferably 10 to 25 vol%. These values apply as well to the inclusions formed by solids.

In case the inclusions are formed by solid materials, it is in particular preferred that the solid catalyst particles comprise up to 30 wt% solid material, more preferably up to 20 wt%. It is in particular preferred that the solid catalyst particles comprise solid inclusions in the range of 1 to 30 wt%, more preferably in the range of 1 to 20 wt% and even more preferably in the range of 1 to 10 wt%.

The inclusions may be of any desired shape, including spherical as well as elongated shapes and irregular shapes. Inclusions in accordance with the present invention may have a plate-like shape or they may be long and narrow, for example in the shape of a fiber. Irregular shapes of all kind are also envisaged by the present invention. Typical inclusions, however, are either spherical or near spherical or they show plate-like shapes. Preferably the inclusions have a spherical or at least near spherical shape. It is preferred that the inclusions are only present in the bulk part of the solid catalyst particles but do not extend to the surface of the catalyst particles.

The inclusions in accordance with the present invention, not comprising catalytically active sites, may be present in the form of solid material, liquids, hollow voids, optionally partially filled with a liquid and/or a solid material, or any combination thereof. It is in particular preferred that the inclusions are solid material and/or hollow voids partially filled with solid material. In a preferred embodiment the inclusions are solid material only. In particular, if a solid material is used for providing catalytically non-active inclusions, the shape of the inclusions can be determined on the basis of the shape of the solid material, or particles of solid material employed. The shape of hollow voids and hollow voids partially filled with liquids are typically determined by the process conditions during the preparation of the solid catalyst particles, as outlined in further detail below.

Typical examples of solid materials suitable for forming inclusions in accordance with the present invention are inorganic materials as well as organic, in particular organic polymeric materials, suitable examples being nano-materials, such as silica, montmorillonite, carbon black, graphite, zeolites, alumina, $TiO_2$ as well as other inorganic particles, including glass nano-beads or any combination thereof. Suitable organic particles, in particular polymeric organic particles, are nano-beads made from polymers such as polystyrene, or other polymeric materials. In any case, the particulate materials employed for providing inclusions in the solid catalyst particles have to be inert towards the catalytically active sites, during the preparation of the solid catalyst particles as well as during the subsequent use in polymerization reactions. The solid materials used for providing inclusions in accordance with the present invention preferably have a low surface area and are more preferably of low porosity or non-porous.

Preferably, the solids used for providing catalytically non-active inclusions have a surface area below 500 $m^2$/g, more preferably below 300 $m^2$/g, yet more preferably below 200 $m^2$/g, still more preferably below 100 $m^2$/g.

Liquids, hollow voids and hollow voids partially filled with liquid may be introduced into the solid catalyst particles by using inert liquids, which preferably are immiscible with the liquids and solvents used during the preparation of the solid catalyst particles in accordance with the invention. These liquids may display a different viscosity, compared with the liquids employed during the catalyst particle preparation as solvents and/or reaction medium. Suitable examples thereof are silicon oils, perfluorinated hydrocarbons, such as hydrocarbons having from 6 to 20 carbon atoms, preferably 7 to 14 carbon atoms, with a particularly preferred example being hydrocarbons with 8 C-atoms including its isomers, i.e. perfluoro octanes and its isomers. Other inert and immiscible liquids may also be employed, including partially fluorinated hydrocarbons, perfluorinated ethers (including polyethers) and partially fluorinated ethers, as long as these liquids are inert towards the catalyst component and provide inclusions in accordance with the present invention.

Preferably, such liquids are employed in combination with a suitable surfactant, which stabilizes the inclusions during the preparation of the solid particles. For example, surfactants, e.g. surfactants based on hydrocarbons (including polymeric hydrocarbons with a molecular weight e.g. up to 10000, optionally interrupted with a heteroatom(s)), preferably halogenated hydrocarbons, such as semi-, or highly-fluorinated hydrocarbons optionally having a functional group, or, preferably semi-, highly- or perfluorinated hydrocarbons having a functionalised terminal, can be used. Surfactants can also be formed by reacting a surfactant precursor bearing at least one functional group with a compound being part of the catalyst solution or solvent and being reactive with said functional group. Examples of the surfactant precursors include e.g. known surfactants which bear at least one functional group selected e.g. from -OH, -SH, -NH$_2$, -COOH, -COONH$_2$, oxides of alkenes, oxo-groups and/or any reactive derivative of these groups, e.g. semi-, highly or perfluorinated hydrocarbons bearing one or more of said functional groups.

The inclusions of the catalyst particles typically have a size in the range of 100 nm (widest diameter), although the size is not restricted to this specific value. The present invention also contemplates inclusions having mean particle sizes of from 20 to 500 nm, with mean particle sizes of from 20 to 400, and in particular from 20 to 200 nm being preferred. In particular mean particle sizes from 30 to 100 nm are preferred. The mean size of liquid-filled voids and hollow voids can be controlled during the preparation of catalyst particles. The mean particle size of the inclusions may be controlled by the size of the solid material employed for providing the inclusions, as outlined above, in connection with the control of the shape of the inclusions.

It is in particular preferred that the inclusions are provided by solids and more preferably that the inclusions are solid material having mean particle sizes of below 100 nm, more preferably from 10 to 90 nm, even more preferably from 10 to 80 nm.

Preferably the catalyst particles of the present invention are obtained by preparing a solution of one or more catalyst components, dispersing said solution in a solvent, so that the catalyst solution forms a dispersed phase in the continuous solvent phase, and solidifying the catalyst phase to obtain the catalyst particles of the present invention. The inclusions in accordance with the present invention may be introduced by appropriately admixing said agent for forming the inclusions with the catalyst solution, during the preparation thereof or after formation of the catalyst phase.

Preferably, the catalyst particles are obtainable by a process comprising the steps of

(a) contacting the catalyst components as defined above, i.e. a metal compound which is selected from one of the groups 1 to 3 of the periodic table (IUPAC) with a transition metal compound which is selected from one of the groups 4 to 10 of the periodic table (IUPAC) or a compound of an actinide or lanthanide, to form a reaction product in the presence of a solvent, leading to the formation of a liquid/liquid two-phase system comprising a catalyst phase and a solvent phase,

(b) separating the two phases and adding an agent for generating said inclusions not comprising catalytically active sites to the catalyst phase,

(c) forming a finely dispersed mixture of said agent and said catalyst phase,

(d) adding the solvent phase to the finely dispersed mixture,

(e) forming an emulsion of the finely dispersed mixture in the solvent phase, wherein the solvent phase represents the continuous phase and the finely dispersed mixture forms the dispersed phase, and

(f) solidifying the dispersed phase.

In another preferred embodiment, the catalyst particles are obtainable by a process comprising the steps of

(a) contacting, in the presence of an agent for generating the inclusions not comprising catalytically active sites, the catalyst components as defined above, i.e. i.e. a metal compound which is selected from one of the groups 1 to 3 of the periodic table (IUPAC) with a transition metal compound which is selected from one of the groups 4 to 10 of the periodic table (IUPAC) or a compound of an actinide or lanthanide, to form a reaction product in the presence of a solvent, leading to the formation of a liquid/liquid two-phase system comprising a catalyst phase and a solvent phase,

(b) forming an emulsion comprising a catalyst phase comprising said agent and a solvent phase, wherein the solvent phase represents the continuous phase and the catalyst phase forms the dispersed phase, and

(c) solidifying the dispersed phase

Additional catalyst components, like compounds of group 13 metal, as described above, can be added at any step before the fnal recovery of the solid catalyst. Further, during the preparation, any agents enhancing the emulsion formation can be added. As examples can be mentioned emulsifying agents or emulsion stabilisers e.g. surfactants, like acrylic or metacrylic polymer solutions and turbulence minimizing agents, like alpha-olefin polymers without polar groups, like polymers of alpha olefins of 6 to 20 carbon atoms.

Suitable processes for mixing include the use of mechanical as well as the use of ultrasound for mixing, as known to the skilled person. The process parameters, such as time of mixing, intensity of mixing, type of mixing, power employed for mixing, such as mixer velocity or wavelength of ultrasound employed, viscosity of solvent phase, additives employed, such as surfactants, etc. are used for adjusting the size of the catalyst particles as well as the size, shape, amount and distribution of the inclusions within the catalyst particles.

Particularly suitable methods for preparing the catalyst particles of the present invention are outlined below.

The catalyst solution or phase may be prepared in any suitable manner, for example by reacting the various catalyst precursor compounds in a suitable solvent. In one embodiment this reaction is carried out in an aromatic solvent, preferably toluene, so that the catalyst phase is formed in situ and separates from the solvent phase. These two phases may then be separated and an agent for forming the inclusions may be added to the catalyst phase. After subjecting this mixture of catalyst phase and agent for providing the inclusions to a suitable dispersion process, for example by mechanical mixing or application of ultrasound, in order to prepare a dispersion of the inclusion providing agent in the catalyst phase, this mixture (which may be a dispersion of solid inclusion providing agent in the catalyst phase forming a microsuspension or a microemulsion of droplets of a liquid inclusion providing agent in the catalyst phase) may be added back to the solvent phase or a new solvent, in order to form again an emulsion of the disperse catalyst phase in the continuous solvent phase. The catalyst phase, comprising the inclusion providing agent, usually is present in this mixture in the form of small droplets, corresponding in shape and size approximately to the catalyst particles to be prepared. Said catalyst particles, comprising the inclusions may then be formed and recovered in usual manner, including the solidification of the catalyst particles by heating and separating steps (for recovering the catalyst particles). In this connection reference is made to the disclosure in the international applications WO 03/000754, WO 03/000757, WO 2007/077027, WO 2004/029112 and WO 2007/077027 disclosing suitable reaction conditions. This disclosure is incorporated herein by reference. The catalyst particles obtained may furthermore be subjected to further post-processing steps, such as washing, stabilizing, prepolymerization, prior to the final use in polymerisation processes.

An alternative to the above outlined method of preparing the catalyst particles of the present invention, in particular suitable for a method employing solid inclusion providing agents, is a method wherein the inclusion providing agent is already introduced at the beginning of the process, i.e. during the step of forming the catalyst solution/catalyst phase. Such a sequence of steps facilitates the preparation of the catalyst particles since the catalyst phase, after formation, has not to be separated from the solvent phase for admixture with the inclusion providing agent.

Suitable method conditions for the preparation of the catalyst phase, the admixture with the solvent phase, suitable additives therefore etc. are disclosed in the above mentioned international applications WO 03/000754, WO 03/000757, WO 2007/077027, WO 2004/029112 and WO 2007/077027, which are incorporated herein by reference.

Details about the formation of catalytically inactive nano-sized inclusions are also provided in WO 2007/077027.

In the following, it will be described in further detail how the propylene random copolymer of the present invention can be prepared.

In principle, the propylene random copolymer as defined above can be prepared under process conditions known to the skilled person for the preparation of random copolymers. Of course, as explained above, the specific catalyst system of the present invention needs to be used.

The process for the manufacture for propylene random copolymer, in which the above defined catalyst system is employed, can be a single stage process using a bulk phase, slurry phase or gas phase reactor. However it is preferred that the propylene random copolymer is produced in a multistage process in which the catalyst system of the instant invention is employed.

Accordingly, it is preferred that the propylene random copolymer is produced in a process comprising the following steps:

> (i) preparing in a first stage a propylene random copolymer or propylene homopolymer, and
> (ii) transferring the propylene random copolymer or homopolymer to a second stage where (co)polymerisation is continued to prepare another propylene random copolymer.

With the above defined process, a propylene homopolymer / propylene random copolymer mixture as well as a propylene random copolymer / propylene random copolymer mixture can be produced. High amounts of comonomer, like ethylene, can be introduced into the polymer chain in the first stage as well as in the second stage without losing high randomness of the final polymer.

The first stage may comprise at least one slurry reactor, preferably a bulk reactor, more preferably a loop reactor, and optionally at least one gas phase reactor, typically one or two gas phase reactor(s). The slurry reactor may be a bulk reactor, where the reaction medium is propylene.

The second stage comprises at least one gas phase reactor, typically 1 or 2 gas phase reactor(s).

Thus, the first stage may comprise a slurry reactor, where a first propylene random copolymer is formed, and the second stage may comprise a gas phase reactor in which a second propylene random copolymer is produced.

"Slurry reactor" designates any reactor such as a continuous or simple batch stirred tank reactor or loop reactor operating in bulk or slurry, including supercritical conditions, in which the polymer forms in particulate form.

Preferably, the slurry reactor in the inventive process is operated as a bulk reactor. "Bulk" means a polymerisation in a reaction medium comprising at least 60 wt.-% propylene monomer.

Preferably, the bulk reactor is a loop reactor.

Further preferred, in the inventive process the temperature in the loop reactor is in the range of 60 to 100 °C. In case in the loop reactor a propylene homopolymer is produced the temperature is preferably in the range of 65 to 95 °C, more preferably in the range of 70 to 85 °C. In turn in case in the loop reactor a propylene random copolymer is produced the temperature is preferably in the range of 60 to 80 °C.

It possible from the above defined multistage processes that the propylene random copolymers produced in the first and second stages are of different molecular weight.

Of course, in a multistage process, both propylene random copolymer fractions are inseparably mixed with each other.

Multistage processes including a loop reactor in serial configuration with one or two gas phase reactors are known to the skilled person, e.g. under the expression BORSTAR technology. Such a process is described in WO 98/58976.

The properties of the propylene random copolymer produced in the gas phase reactor(s) such as its comonomer content, in particular ethylene content, may nevertheless be determined by considering the corresponding values for the slurry reactor product and the final propylene random copolymer and taking into account the production split.

The invention will now be described in further detail by providing the following examples.

### Examples

### 1. Definitions/Measuring Methods

The following definitions of terms and determination methods apply for the above general description of the invention as well as to the below examples unless otherwise defined.

**Number average molecular weight ($M_n$), weight average molecular weight ($M_w$) and molecular weight distribution (MWD)** are determined by size exclusion chromatography (SEC) using Waters Alliance GPCV 2000 instrument with online viscometer. The oven temperature is 140 °C. Trichlorobenzene is used as a solvent (ISO 16014).

**$MFR_2$ (230 °C)** is measured according to ISO 1133 (230 °C, 2.16 kg load).

**RANDOMNESS** In the FTIR measurements, films of 250 -mm thickness were compression molded at 225 °C and investigated on a Perkin-Elmer System 2000 FTIR instrument. The ethylene peak area (760-700 cm$^{-1}$) was used as a measure of total ethylene content. The absorption band for the structure -P-E-P- (one ethylene unit between propylene units), occurs at 733 cm$^{-1}$. This band characterizes the random ethylene content. For longer ethylene sequences (more than two units), an absorption band occurs at 720 cm$^{-1}$. Generally, a shoulder corresponding to longer ethylene runs is observed for the random copolymers. The calibration for total ethylene content based on the area and random ethylene (PEP) content based on peak height at 733 cm$^{-1}$ was made by $^{13}$CNMR. (Thermochimica Acta, 66 (1990) 53-68 ).

$$\text{Randomness} = \text{random ethylene (-P-E-P-) content / the total ethylene content} \times 100\%.$$

**Ethylene content,** in particular of the matrix, is measured with Fourier transform infrared spectroscopy (FTIR) calibrated with $^{13}$C-NMR. When measuring the ethylene content in polypropylene, a thin film of the sample (thickness about 250 mm) was prepared by hot-pressing. The area of absorption peaks 720 and 733 cm$^{-1}$ was measured with Perkin Elmer FTIR 1600 spectrometer. The method was calibrated by ethylene content data measured by $^{13}$C-NMR.

**Content of any one of the C4 to C20 $\alpha$-olefins** is determined with $^{13}$C-NMR; literature: "IR-Spektroskopie für Anwender"; WILEY-VCH, 1997 and "Validierung in der Analytik", WILEY-VCH, 1997.

**Melting temperature Tm, crystallization temperature Tc, and the degree of crystallinity:** measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

### Xylene soluble fraction (XS) and amorphous fraction (AM)

2.0 g of polymer are dissolved in 250 ml p-xylene at 135 °C under agitation. After $30\pm2$ minutes the solution is allowed to cool for 15 minutes at ambient temperature and then allowed to settle for 30 minutes at $25\pm0.5$ °C . The solution is filtered with filter paper into two 100 ml flasks.

The solution from the first 100 ml vessel is evaporated in nitrogen flow and the residue is dried under vacuum at 90 °C until constant weight is reached.

$$XS\% = (100 \times m_1 \times v_0) / (m_0 \times v_1)$$

$m_0$ = initial polymer amount (g)
$m_1$ = weight of residue (g)
$v_0$ = initial volume (ml)
$v_1$ volume of analysed sample (ml)

The solution from the second 100 ml flask is treated with 200 ml of acetone under vigorous stirring. The precipitate is filtered and dried in a vacuum-oven at 90 °C.

$$AM\% = (100 \times m_2 \times v_0) / (m_0 \times v_1)$$

$m_0$ = initial polymer amount (g)
$m_2$ = weight of precipitate (g)
$v_0$ = initial volume (ml)
$v_1$ volume of analysed sample (ml)

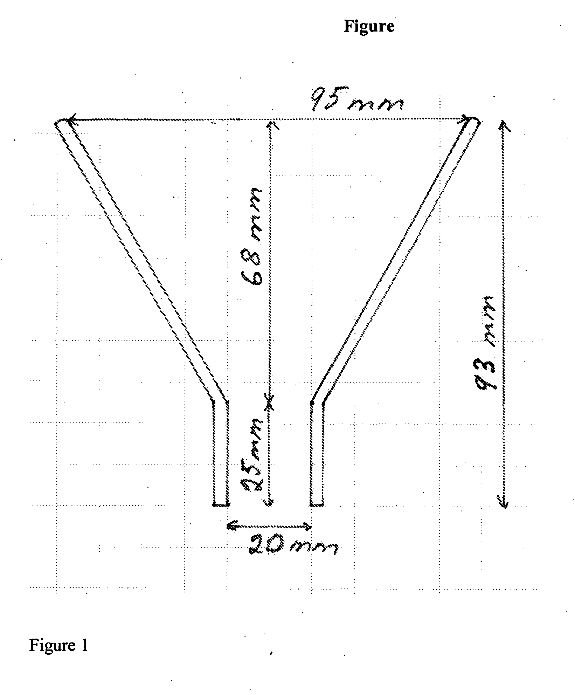

**Flowability** 90 g of polymer powder and 10 ml of xylene was mixed in a closed glass bottle and shaken by hand for 30 minutes. After that the bottle was left to stand for an additional 1.5 hour while occasionally shaken by hand. Flowability was measured by letting this sample flow through a funnel at room temperature. The time it takes for the sample to flow through is a measurement of stickiness. The average of 5 separate determinations was defined as flowability. The dimensions of the funnel can be deducted from Figure 1.

**Porosity:** BET with $N_2$ gas, ASTM 4641, apparatus Micromeritics Tristar 3000; sample preparation (catalyst and poymer): at a temperature of 50 °C, 6 hours in vacuum.

**Surface area:** BET with $N_2$ gas ASTM D 3663, apparatus Micromeritics Tristar 3000: sample preparation (catalyst and poymer): at a temperature of 50 °C, 6 hours in vacuum.

**Mean particle size** is measured with Coulter Counter LS200 at room temperature with n-heptane as medium; particle sizes below 100 nm by transmission electron microscopy.

**Bulk density** BD is measured according ASTM D 1895

## Determination of Ti and Mg amounts in the catalyst

The determination of Ti and Mg amounts in the catalysts components is performed using ICP. 1000 mg/l standard solutions of Ti and Mg are used for diluted standards (diluted standards are prepared from Ti and Mg standard solutions, distilled water and $HNO_3$ to contain the same $HNO_3$ concentration as catalyst sample solutions).

50-100 mg of the catalyst component is weighed in a 20 ml vial (accuracy of weighing 0.1 mg). 5 ml of concentrated $HNO_3$ (Suprapur quality) and a few milliliters of distilled water is added. The resulting solution is diluted with distilled water to the mark in a 100 ml measuring flask, rinsing the vial carefully. A liquid sample from the measuring flask is filtered using 0.45 $\mu$m filter to the sample feeder of the ICP equipment. The concentrations of Ti and Mg in the sample solutions are obtained from ICP as mg/l.

Percentages of the elements in the catalyst components are calculated using the following equation:

$$\text{Percentage (\%)} = (A \cdot V \cdot 100\% \cdot V \cdot 1000^{-1} \cdot m^{-1}) \cdot (V_a \cdot V_b^{-1})$$

where

A = concentration of the element (mg/l)
V = original sample volume (100 ml)

m = weight of the catalyst sample (mg)
$V_a$ = volume of the diluted standard solution (ml)
$V_b$ = volume of the 1000 mg/l standard solution used in diluted standard solution (ml)

**Determination of donor amounts in the catalyst components**

The determination of donor amounts in the catalyst components is performed using HPLC (UV-detector, RP-8 column, 250 mm $\times$ 4 mm). Pure donor compounds are used to prepare standard solutions.

50-100 mg of the catalyst component is weighed in a 20 ml vial (accuracy of weighing 0.1 mg). 10 ml acetonitrile is added and the sample suspension is sonicated for 5-10 min in an ultrasound bath. The acetonitrile suspension is diluted appropriately and a liquid sample is filtered using 0.45 $\mu$m filter to the sample vial of HPLC instrument. Peak heights are obtained from HPLC.

The percentage of donor in the catalyst component is calculated using the following equation:

$$\text{Percentage (\%)} = A_1 \cdot c \cdot V \cdot A_2^{-1} \cdot m^{-1} \cdot 0.1\%$$

where

$A_1$ = height of the sample peak
c = concentration of the standard solution (mg/l)
V = volume of the sample solution (ml)
$A_2$ = height of the standard peak
m = weight of the sample (mg)

**2. Sample preparation**

**Example 1: Preparation of a soluble Mg-complex**

A magnesium complex solution was prepared by adding, with stirring, 55.8 kg of a 20 % solution in toluene of BOMAG (Mg(Bu)$_{1,5}$(Oct)$_{0,5}$) to 19.4 kg 2-ethylhexanol in a 150l steel reactor. During the addition the reactor contents were maintained below 20 °C. The temperature of the reaction mixture was then raised to 60 °C and held at that level for 30 minutes with stirring, at which time reaction was complete. 5.50 kg 1,2-phthaloyl dichloride was then added and stirring of the reaction mixture at 60 °C was continued for another 30 minutes. After cooling to room temperature a yellow solution was obtained.

**Example 2: Catalyst with catalytically non-active inclusions**

24. kg titanium tetrachloride were placed in a 90 steel reactor. A mixture of 0,190 kg silica (mean particle size 80 nm; surface area 440 m$^2$/g; bulk density 0.063 g/cm$^3$) and 21.0 kg of Mg-complex were then added to the stirred reaction mixture over a period of two hours. During the addition of the Mg-complex the reactor contents were maintained below 35 °C.

4.5 kg n-heptane and 1.05.1 Viscoplex 1-254 of RohMax Additives GmbH (a polyalkyl methacrylate with a viscosity at 100 °C of 90 mm$^2$/s and a density at 15 °C of 0.90 g/ml) were then added to the reaction mixture at room temperature and stirring was maintained at that temperature for a further 60 minutes.

The temperature of the reaction mixture was then slowly raised to 90°C over a period of 60 minutes and held at that level for 30 minutes with stirring. After settling and siphoning the solids underwent washing with a mixture of 0,244 1 of a 30 % solution in toluene of diethyl aluminum dichlorid and 50 kg toluene for 110 minutes at 90 °C, 30 kg toluene for 110 minutes at 90 °C, 30 kg n-heptane for 60 minutes at 50 °C, and 30 kg n-heptane for 60 minutes at 25 °C.

Finally, 4.0 kg white oil (Primol 352; viscosity at 100 °C of 8.5 mm$^2$/s; density at 15 °C of 0.87 g/ml) was added to the reactor. The obtained oil slurry was stirred for a further 10 minutes at room temperature before the product was transferred to a storage container.

From the oil slurry a solids content of 23.4 wt% was analyzed.

**Example 3: Compact catalyst particles - no inclusions**

Same as in example 2, but no SiO$_2$ nano-particles were added to the Mg-complex.

Further details about the catalysts prepared according to Examples 2 and 3 are shown in Table 1.

**Table 1: Properties of the catalyst particles**

| | | Ex 2 | Ex 3 |
|---|---|---|---|
| Ti | [wt.-%] | 2.56 | 3.81 |
| Mg | [wt.-%] | 11.6 | 11.4 |
| DOP | [wt.-%] | 22.7 | 24.4 |
| Nanoparticles | [wt.%] | 7.4 | - |
| $d_{50}$ | [$\mu$m] | 25.6 | 21.9 |
| Mean | [$\mu$m] | 25.60 | 20.2 |
| Surface area* | [$m^2$/g] | 13.0 | <5 |
| Porosity | [nl/g] | 0.09 | - |

*The lowest limit for measuring the surface area by the method indicated above is about 5 $m^2$/g.

The preparation of propylene random copolymers using the catalysts of Examples 2 and 3 is described in Examples 4 and 5.

**Example 4: Preparation of the inventive propylene random copolymer**

All raw materials were essentially free from water and air and all material additions to the reactor and the different steps were done under inert conditions in nitrogen atmosphere. The water content in propylene was less than 5 ppm.

Stage 1: Bulk polymerisation step

The polymerisation was done in a 5 litre reactor, which was heated, vacuumed and purged with nitrogen before taken into use. 138 $\mu$l TEA (tri ethyl Aluminium, from Witco used as received), 47 $\mu$l donor D. (dicyclo pentyl dimethoxy silane, from Wacker, dried with molecular sieves) and 30 ml pentane (dried with molecular sieves and purged with nitrogen) were mixed and allowed to react for 5 minutes. Half of the mixture was added to the reactor and the other half was mixed with 12.4 mg highly active and stereo specific Ziegler Natta catalyst of example 2. After about 10 minutes was the ZN catalyst/TEA/donor D/pentane mixture added to the reactor. The Al/Ti molar ratio was 150 and the Al/Do molar ratio was 5. 350 mmol hydrogen and 1400 g were added to the reactor. Ethylene was added continuously during polymerisation and totally 19.2 g was added. The temperature was increased from room temperature to 70 °C during 16 minutes. The reaction was stopped, after 30 minutes at 70 °C, by flashing out unreacted monomer. Finally the polymer powder was taken out from the reactor and analysed and tested. The ethylene content in the product was 3.7 w-%. The other polymer details are seen in table 3.

Stage 2: Gas phase reactor

After having flashed out unreacted propylene after the bulk polymerisation step the polymerisation was continued in gas phase. After the bulk phase the reactor was pressurised up to 5 bar and purged three times with a 0.085 mol/mol ethylene/propylene mixture. 150 mmol hydrogen was added and temperature was increased to 80 °C and pressure with the aforementioned ethylene/propylene mixture up to 20 bar during 13 minutes. Consumption of ethylene and propylene was followed from scales. The reaction was allowed to continue until a total consumption (ethylene + propylene) of 284 g was reached, which means half of the final product was produced in the bulk phase polymerisation and half in the gas phase polymerisation. When opening the reactor it was seen that the polymer powder was free flowing. XS of the polymer was 22 wt.-% and ethylene content in the product was 6.0 wt.-%, meaning that ethylene content in material produced in the gas phase was 8.3 wt.-%. Other details are seen in table 3.

**Example 5: Comparative Example**

First stage: Bulk polymerisation step

This first stage reaction was done as described above in example 4, with the exception that the catalyst of example 3 (i.e. a catalyst which does not comprise the catalytically non-active inclusions) was used. Ethylene content in the polymer was 3.7 wt.%. The other details are shown in table 2.

Second stage: Gas phase reactor

The second stage was done as described above in example 4, of course again with the exception that the catalyst of example 3 (i.e. a catalyst which does not comprise the catalytically non-active inclusions) was used. When opening the reactor after polymerisation it was seen that about 2/3 of the polymer powder was loosely glued together. XS of the product was 23 wt.%. Ethylene content in the final product was 6.3 wt.-%, which means that the ethylene content in the material produced in the gas phase was 8.9 wt.%. The other details are shown in table 2.

**Table 2: Polymerization results**

| | | Ex 5, 1st stage | Ex 4, 1st stage | Ex 5, 2nd stage | Ex 4, 2nd stage |
|---|---|---|---|---|---|
| Catalyst type | | Ex. 3 | Ex. 2 | Ex. 3 | Ex. 2 |
| Catalyst amount | [mg] | 16.2 | 12.4 | 16.2 | 12.5 |
| **Bulk** | | | | | |
| Ethylene feed | [g] | 19.7 | 19.2 | 19.3 | 19.3 |
| **Gas phase polymerisation** | | | | | |
| Time | [min] | - | - | 77 | 65 |
| Ethylene/propylene in feed | [mol/mol] | - | - | 0.085 | 0.085 |
| Ethylene feed | [g] | - | - | 26.2 | 25 |
| Propylene feed | [g] | - | - | 467 | 434 |
| Yield | [g] | 318 | 282 | 630 | 598 |
| Split bulk/gas phase material | | 100/0 | 100/0 | 50/50 | 50/50 |
| **Polymer** | | | | | |
| Ethylene | [wt.-%] | 3.7 | 3.7 | 6.3 | 6 |
| Ethylene in gas phase material | [wt.-%] | | | 8.9 | 8.3 |
| Randomness | [%] | 75.7 | 75.6 | 66.9 | 67.7 |
| XS | [wt.-%] | 7.6 | 6.7 | 23.3 | 22 |
| MFR | [g/10min] | 7.5 | 5.0 | 5.8 | 4.0 |
| Tm | [°C] | 139 | 140.1 | 132.5 | 134.7 |
| Crystallinity | [%] | 36 | 36 | 27 | 27 |
| Flow average | [s] | - | - | 5.7 | 2.3 |

Polymer properties shown in the columns which relate to the second reactor stage are those of the final polymer (i.e. the random copolymer comprising both fractions), unless stated otherwise.
In the inventive example as well as in the comparative example, the catalyst used for the polymerisation was prepared by the emulsion method. However, in the comparative example, the catalyst particles did not comprise catalytically inactive nano-sized inclusions. Although the catalyst without inclusions could provide a random copolymer of high ethylene content and high randomness, the polymer particles had a strong tendency to adhere to the reactor wall. Stickiness was also demonstrated in the flowability test described above. This problem of stickiness inside the reactor is overcome by the use of catalyst particles having catalytically inactive inclusions. Thus, the polymer particles of the inventive examples differ from those of the comparative example at least in their surface structure and/or surface composition which in turn affects adhesion properties inside the polymerisation reactor and stickiness behaviour.

**Claims**

1. A propylene random copolymer, comprising comonomers selected from the group consisting of ethylene, $C_4$ to $C_{20}$ alpha-olefins, and any combination thereof, wherein the propylene random copolymer

   (a) has a comonomer content of at least 3.5 wt.-%,
   (b) has a randomness of at least 30 %, and
   (c) is prepared in the presence of a catalyst system comprising solid catalyst particles, wherein the solid catalyst particles

(c1) have a specific surface area of less than 20 m$^2$/g,
(c2) comprise a transition metal compound which is selected from one of the groups 4 to 10 of the periodic table or a compound of actinide or lanthanide,
(c3) comprise a metal compound which is selected from one of the groups 1 to 3 of the periodic table, and
(c4) comprise inclusions not having catalytically active sites.

2. The random copolymer according to claim 1, wherein the comonomer content is at least 5.0 wt%.

3. The random copolymer according to claim 1 or claim 2, wherein the comonomer content is less than 12.0 wt%.

4. The random copolymer according to one of the preceding claims, comprising at least two random copolymer fractions which differ in comonomer content, wherein

(i) the first fraction has a comonomer content within the range of 0.5 to 6.0 wt%, and
(ii) the second fraction has a comonomer content within the range of 5.0 to 12.0 wt%, the comonomer content of the second fraction being higher than the comonomer content of the first fraction.

5. The random copolymer according to one of the preceding claims, wherein the comonomer is ethylene and/or a C$_4$ to C$_8$ alpha-olefin.

6. The random copolymer according to one of the preceding claims, wherein the randomness of the propylene random copolymer is at least 60 %.

7. The random copolymer according to one of the preceding claims, wherein the inclusions are free of transition metal compounds which are selected from one of the groups 4 to 10 of the periodic table (IUPAC), and of compounds of actinide or lanthanide.

8. The random copolymer according to one of the preceding claims, wherein the solid catalyst particles are spherical.

9. The random copolymer according to one of the preceding claims, wherein the solid catalyst particles have a mean particle size below 500 $\mu$m.

10. The random copolymer according to one of the preceding claims, wherein the solid catalyst particles have a specific surface area of less than 15 m$^2$/g.

11. The random copolymer according to one of the preceding claims, wherein the solid catalyst particles have a pore volume of less than 1.0 ml/g.

12. The random copolymer according to one of the preceding claims, wherein the catalyst system is a Ziegler-Natta type catalyst.

13. The random copolymer according to one of the preceding claims, wherein the solid catalyst particles comprise an internal electron donor compound.

14. The random copolymer according to one of the preceding claims, wherein the inclusions have a mean particle size within the range of 20 to 500 nm.

15. The random copolymer according to one of the preceding claims, wherein the average volume percentage of the inclusions within the solid catalyst particles is from 8 to 30 vol%, based on the volume of the solid particles.

16. The random copolymer according to one of the preceding claims, wherein the solid catalyst particles comprise up to 30.0 wt% inclusions.

17. The random copolymer according to one of the preceding claims, wherein the inclusions are selected from the group consisting of

(a) hollow voids, optionally partially filled with a liquid and/or a solid material,
(b) liquids,
(c) solid material, and
(d) mixtures of (a) to (c).

18. The random copolymer according to claim 17, wherein the solid material is selected from inorganic materials, organic materials, or any combination thereof.

19. The random copolymer according to claim 17 or 18, wherein the solid material has a mean particle size below 100 nm.

20. The random copolymer according to one of the claims 17 to 19, wherein the solid material has a specific surface area below 500 m$^2$/g.

21. The random copolymer according to one of the preceding claims, having a content of polymer solubles in xylene (XS) within the range of 4.0 to 55.0 wt%, based on the weight of the propylene random copolymer.

22. The random copolymer according to one of the preceding claims, wherein the random copolymer is present in the form of particles which have a bulk density of more than than 500 kg/m$^3$, measured according to ASTM D 1895, and/or a specific surface area of less than 10 m$^2$/g.

23. The random copolymer according to one of the preceding claims, wherein the random copolymer has a flowability value of less than 5.5 sec, measured by the flowability test as defined in the description.

**Patentansprüche**

1. Ein Random-Propylen-Copolymer umfassend Comonomere ausgewählt aus der Gruppe bestehend aus Ethylen, $C_4$ bis $C_{20}$ alpha-Olefinen, und jegliche Kombination davon, worin das Random-Propylen-Copolymer,

    a) ein Comonomeranteil von mindestens 3,5 Gew.-% hat
    b) eine Randomness von mindestens 30% hat und
    c) in Anwesenheit eines Katalysatorsystems hergestellt ist, besagtes Katalysatorsystem feste Katalysatorpartikel umfasst, worin die festen Katalysatorpartikel

        c1) eine spezifische Oberfläche von weniger als 20 qm/g haben,
        c2) eine Übergangsmetallverbindung umfassen welche ausgewählt ist aus einer der Gruppen 4 bis 10 des Periodensystems oder einer Actinidverbindung oder Lanthanaidverbindung,
        c3) eine Metallverbindung umfasst, welche ausgewählt ist aus einer der Gruppen 1 bis 3 des Periodensystems, und
        c4) Einlagerungen umfasst, die keine katalytisch aktiven Zentren haben.

2. Das Random-Copolymer nach Anspruch 1, worin der Comonomeranteil mindestens 5 Gew.-% ist.

3. Das Random-Copolymer nach Anspruch 1 oder 2, worin der Comonomeranteil mindestens 12 Gew.-% ist.

4. Das Random-Copolymer nach irgendeinem der vorhergehenden Ansprüche, umfassend mindestens zwei Random-Copolymerfraktionen welche sich im Comonomeranteil unterscheiden, worin

    (i) die erste Fraktion einen Comonomeranteil im Bereich von 0,5 bis 6,0 Gew.-% hat, und
    (ii) die zweite Fraktion einen Comonomeranteil im Bereich von 5,0 bis 12,0 Gew.-% hat, der Comonomeranteil der zweiten Fraktion höher ist als der Comonomeranteil der ersten Fraktion.

5. Das Random-Copolymer nach irgendeinem der vorhergehenden Ansprüche, worin das Comonomer Ethylen und/oder ein $C_4$ bis $C_8$ alpha-Olefin ist.

6. Das Random-Copolymer nach irgendeinem der vorhergehenden Ansprüche, worin die Randomness des Random-Propylen-Copolymers mindestens 60% ist.

7. Das Random-Copolymer nach irgendeinem der vorhergehenden Ansprüche, worin die Einlagerungen frei von Übergangsmetallen sind, wobei die Übergangsmetalle aus einer der Gruppen 4 bis 10 des Periodensystemes (IUPAC) und Actinidverbindungen oder Lanthaniidverbindungen ausgewählt sind.

8. Das Random-Copolymer nach irgendeinem der vorhergehenden Ansprüche, worin die festen Katalysatorpartikel sphärisch sind.

9. Das Random-Copolymer nach irgendeinem der vorhergehenden Ansprüche, worin die festen Katalysatorpartikel eine mittlere Partikelgröße unterhalb 500 μm haben.

10. Das Random-Copolymer nach irgendeinem der vorhergehenden Ansprüche, worin die festen Katalysatorpartikel eine spezifische Oberfläche von weniger als 15 qm/g haben.

11. Das Random-Copolymer nach irgendeinem der vorhergehenden Ansprüche worin die festen Katalysatorpartikel ein Porenvolumen von weniger als 1.0 ml/g haben.

12. Das Random-Copolymer nach irgendeinem der vorhergehenden Ansprüche, worin das Katalysatorsystem ein Ziegler-Natter-Katalysator Typ ist.

13. Das Random-Copolymer nach irgendeinem der vorhergehenden Ansprüche, worin die festen Katalysatorpartikel eine interne Elektronen-Donor-Verbindung umfassen.

14. Das Random-Copolymer nach irgendeinem der vorhergehenden Ansprüche, worin die Einlagerungen eine mittlere Partikelgröße im Bereich von 20 bis 500 nm haben.

15. Das Random-Copolymer nach irgendeinem der vorhergehenden Ansprüche, worin das Volumen der Einlagerungen innerhalb der festen Katalysatorpartikel von 8 bis 30 Vol.-% ist basierend auf dem Volumen der festen Partikel.

16. Das Random-Copolymer nach irgendeinem der vorhergehenden Ansprüche, worin die festen Katalysatorpartikel bis zu 30 Gew.-% Einlagerungen umfassen.

17. Das Random-Copolymer nach irgendeinem der vorhergehenden Ansprüche, worin die Einlagerungen ausgewählt sind aus der Gruppe bestehend aus

   a) Hohlräume, optional teilweise gefiillt mit Flüssigkeit und/oder festen Material,
   b) Flüssigkeiten,
   c) festen Material, und
   d) Mischungen aus (a) bis (c).

18. Das Random-Copolymer nach Anspruch 17, worin das feste Material ausgewählt ist aus anorganischen Materialien, organischen Materialien und jegliche Kombination davon.

19. Das Random-Copolymer nach Anspruch 17 und 18, worin das feste Material eine mittlere Partikelgröße unter 100 nm hat.

20. Das Random-Copolymer nach einem der Ansprüche 17 bis 19, worin das feste Material eine spezifische Oberfläche unterhalb 500 qm/g hat.

21. Das Random-Copolymer nach irgendeinem der vorhergehenden Ansprüche, wobei der Anteil von Polymerlöslichen in Xylol im Bereich von 4.0 bis 55.0 Gew.-% liegt, basierend auf dem Gehalt des Random-Propylen-Copolymers.

22. Das Random-Copolymer nach irgendeinem der vorhergehenden Ansprüche, worin das Random-Copolymer in Form von Partikeln anwesend ist welche eine nach ASTM D 1895 gemessene Schüttdichte von mehr als 500 kg/m$^3$ haben und/oder eine spezifische Oberfläche von weniger als 10qm/g,

23. Das Random-Copolymer nach irgendeinem der vorhergehenden Ansprüche, worin das Random-Copolymer einen Fließfähigkeitswert von weniger als 5,5 sec hat gemessen mittels des Fließfähigkeitstestes wie in der Beschreibung beschrieben.

**Revendications**

1.  Copolymère aléatoire de propylène, comprenant des comonomères choisis dans le groupe constitué par l'éthylène, les alpha-oléfines en $C_4$ à $C_{20}$, et une combinaison quelconque de ceux-ci, où le copolymère aléatoire de propylène

    (a) a une teneur en comonomère d'au moins 3,5% en poids,
    (b) a un caractère aléatoire d'au moins 30%, et
    (c) est préparé en présence d'un système de catalyseur comprenant des particules de catalyseurs solides, où les particules de catalyseurs solides

    (c1) ont une surface spécifique inférieure à 20 $m^2$/g,
    (c2) comprennent un composé de métal de transition qui est choisi parmi l'un des groupes 4 à 10 du tableau périodique ou un composé d'actinide ou de lanthanide,
    (c3) comprennent un composé métallique qui est choisi parmi l'un des groupes 1 à 3 du tableau périodique, et
    (c4) comprennent des inclusions n'ayant pas de sites catalytiquement actifs.

2.  Copolymère aléatoire selon la revendication 1, dans lequel la teneur en comonomère est d'au moins 5,0% en poids.

3.  Copolymère aléatoire selon la revendication 1 ou la revendication 2, dans lequel la teneur en comonomère est inférieure à 12,0% en poids.

4.  Copolymère aléatoire selon l'une des revendications précédentes, comprenant au moins deux fractions de copolymères aléatoires qui diffèrent par leur teneur en comonomère, dans lequel

    (i) la première fraction a une teneur en comonomère comprise dans la plage de 0,5 à 6,0% en poids, et
    (ii) la deuxième fraction a une teneur en comonomère comprise dans la plage de 5,0 à 12,0% en poids, la teneur en comonomère de la seconde fraction étant supérieure à celle de la première fraction.

5.  Copolymère aléatoire selon l'une des revendications précédentes, dans lequel le comonomère est l'éthylène et/ou une alpha-oléfine en $C_4$ à $C_8$.

6.  Copolymère aléatoire selon l'une des revendications précédentes, dans lequel le caractère aléatoire du copolymère aléatoire de propylène est d'au moins 60%.

7.  Copolymère aléatoire selon l'une des revendications précédentes, dans lequel les inclusions sont dépourvues de composés de métaux de transition qui sont choisis parmi l'un des groupes 4 à 10 du tableau périodique (IUPAC), et de composés d'actinide ou de lanthanide.

8.  Copolymère aléatoire selon l'une des revendications précédentes, dans lequel les particules de catalyseurs solides sont sphériques.

9.  Copolymère aléatoire selon l'une des revendications précédentes, dans lequel les particules de catalyseurs solides ont une dimension particulaire moyenne inférieure à 500 $\mu$m.

10. Copolymère aléatoire selon l'une des revendications précédentes, dans lequel les particules de catalyseurs solides ont une aire de surface spécifique inférieure à 15 $m^2$/g.

11. Copolymère aléatoire selon l'une des revendications précédentes, dans lequel les particules de catalyseurs solides ont un volume poreux inférieur à 1,0 ml/g.

12. Copolymère aléatoire selon l'une des revendications précédentes, dans lequel le système de catalyseur est un catalyseur de type Ziegler-Natta.

13. Copolymère aléatoire selon l'une des revendications précédentes, dans lequel les particules de catalyseurs solides comprennent un composé donneur d'électron interne.

14. Copolymère aléatoire selon l'une des revendications précédentes, dans lequel les inclusions ont une dimension particulaire moyenne comprise dans la plage de 20 à 500 nm.

**15.** Copolymère aléatoire selon l'une des revendications précédentes, dans lequel le pourcentage volumétrique moyen des inclusions au sein des particules de catalyseurs solides est de 8 à 30 % en volume, sur la base du volume des particules solides.

**16.** Copolymère aléatoire selon l'une des revendications précédentes, dans lequel les particules de catalyseurs solides comprennent jusqu'à 30,0% en poids d'inclusions.

**17.** Copolymère aléatoire selon l'une des revendications précédentes, dans lequel les inclusions sont choisis dans le groupe constitué par

    (a) des vides creux, éventuellement remplis partiellement d'un liquide et/ou d'un matériau solide,
    (b) des liquides,
    (c) un matériau solide, et
    (d) des mélanges de (a) à (c).

**18.** Copolymère aléatoire selon la revendication 17, dans lequel le matériau solide est choisi parmi les matériaux inorganiques, les matériaux organiques, ou une combinaison quelconque de ceux-ci.

**19.** Copolymère aléatoire selon la revendication 17 ou 18, dans lequel le matériau solide a une dimension particulaire moyenne inférieure à 100 nm.

**20.** Copolymère aléatoire selon l'une des revendications 17 à 19, dans lequel le matériau solide possède une surface spécifique inférieure à 500 m$^2$/g.

**21.** Copolymère aléatoire selon l'une des revendications précédentes, ayant une teneur en polymère soluble dans le xylène (XS) comprise dans la plage de 4,0 à 55,0% en poids, sur la base du poids du copolymère aléatoire de propylène.

**22.** Copolymère aléatoire selon l'une des revendications précédentes, ledit copolymère aléatoire étant présent sous forme de particules qui possèdent une densité apparente supérieure à 500 kg/m$^3$, mesurée selon ASTM D 1895, et/ou une surface spécifique inférieure à 10 m$^2$/g.

**23.** Copolymère aléatoire selon l'une des revendications précédentes, ledit copolymère aléatoire ayant une valeur de fluidité inférieure à 5,5 sec, mesurée à l'aide du test de fluidité tel que défini dans la description.

**Figure**

Figure 1

**EP 2 065 407 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03000754 A
- WO 2005113613 A
- EP 1681315 A1
- WO 2007077027 A
- WO 03000757 A
- WO 2004029112 A
- WO 9858976 A

**Non-patent literature cited in the description**

- *Thermochimica Acta,* 1990, vol. 66, 53-68
- IR-Spektroskopie für Anwender. WILEY-VCH, 1997
- Validierung in der Analytik. WILEY-VCH, 1997